# EUROPEAN PATENT SPECIFICATION

(11) **EP 2 256 743 B1**
(45) Date of publication and mention of the grant of the patent: **03.04.2013**
(21) Application number: 10175147.7
(22) Date of filing: 20.10.2006
(51) Int. Cl.: G11B 33/04

(54) **Media container with band header**
Medienbehälter mit Band-Header
Conteneur de supports avec bande d'en-tête

(30) Priority: 20.10.2005 US 728456 P; 20.10.2005 US 728497 P
(43) Date of publication of application: 01.12.2010
(62) Divisional of application: 06022069.6
(73) Proprietor: Atlas AGI Holdings, LLC, Greenwich CT 06830 (US)
(72) Inventor: Gelardi, John A., Midlothian, VA 23113 (US); Kostyun, James, Pittsfield, MA 01201 (US); Philippe, James, Sanford, ME 04073 (US)
(74) Representative: Coulson, Elizabeth Eve

(56) References cited:
- WO-A1-01/43132
- WO-A1-98/49684
- US-A- 5 267 647
- US-A1- 2003 106 814
- US-A1- 2003 196 916
- US-A1- 2004 108 230

## Description

### BACKGROUND OF THE INVENTION

### Field of the Invention

The present invention relates to containers for holding recording media. Particularly, the present invention is directed to such containers for holding relatively thin media, such as disc-shaped media.

### Description of Related Art

Various disc-shaped media are currently used to record and store information optically or magnetically. Such media include compact discs that hold audio or video or other data recorded physically, such as by use of a laser beam, which are then optically read by a laser beam. Often, such discs are sold with information already recorded thereon. In other applications, such discs are sold in blank form and are used by the customer to record and store information thereon. As used herein, the term "compact disc" or "CD" is intended to encompass all such discs, whatever their size, and for all known or proposed uses.

Compact discs containing laser recorded information are typically packaged in injection molded plastic enclosures designed to hold one or more CDs for protecting the discs during storage and shipment. Enclosures presently used, such as the well known "jewel box," Include a base or bottom element, an insert or tray in the base element for positioning and supporting the compact disc in the base element, e.g., by a center projection, commonly referred to as a "rosette", which engages the periphery of the aperture in the center of the disc, and an operable lid or cover hinged to the base element through a spine section. Other enclosures omit the tray, and support the disc via a center projection formed directly on the base element. The enclosure is typically at least partially transparent and graphics relating to the disc and containing trademark and sales promotional information are usually inserted in such a manner as to be visible through the enclosure. Moreover, in certain embodiments a clear plastic sheet or film is applied to the outside of the package, forming a pocket for receiving an insert containing graphics (i.e., a "slip sheet").

While such containers can include printed material in such a pocket, or directly printed thereon, the information on the printed material will vary, to include information related to the particular medium held within the container. For example, containers for different movies on DVDs (or digital video discs) will include printed information related to the respective movie.

US2003/196916 to Jakobowicz discloses a media disc case that includes a container at least partially fabricated from a see-through material for holding a media disk. A sleeve is affixed to the container for holding a graphical insert and is positioned such that a portion of the media disc is visible through the opening.

With the ever increasing variety of formats for recorded media, variations in the printed information can result in difficulty locating a film in the desired format. That is, there is no guarantee that different movie studios and different graphic artists will provide icons indicating the medium format on the printed material in a consistent and easy-to find location. The present invention provides a solution for this problem.

### SUMMARY OF THE INVENTION

The purpose and advantages of the present invention will be set forth in and apparent from the description that follows. Additional advantages of the invention will be realized and attained by the methods and systems particularly pointed out in the written description and claims hereof, as well as from the appended drawings.

To achieve these and other advantages and in accordance with the purpose of the invention, as embodied, the invention includes a container for carrying an information storage medium. The container, in accordance with one embodiment of the invention, includes bottom and top walls each having inner and outer surfaces, a medium-engaging element provided on the inner surface of at least one of the top and bottom walls, for securing the storage medium thereto, a hinge connecting the bottom wall and the top wall, and a display region provided on the outer surface of the top wall, in a region proximate at least one end of the container. The display region is configured and adapted for the display of indicia, and can have any desired shape, such as rectangular or ovoid, for example.

The container can additionally include first and second latching elements defined on the top and bottom walls, respectively, for engaging one another to secure the container in a closed condition. The container can further include a film applied thereto forming a pocket extending from and across the outer surface of the top wall, around the hinge and across the outer surface of the bottom wall. The pocket can function as a receptacle for printed material related to the media held in the container. The film forming such pocket can be set-back from the display region, allowing an unobstructed view of the display region. The display region can be embodied so as to extend between about 1 and 5 centimeters from the an end wall of the container, and can extend fully across the container, parallel to the end wall.

The indicia can be printed on or molded into the upper face of the top wall. The indicia can be provided on an extension supported by and extending from the bottom wall through an aperture defined in the display region of the top wall. If so embodied, indicia can be provided that corresponds to a media format of the storage medium carried within the container.

In accordance with another aspect of the invention, a container for carrying an information storage medium is provided, having a spine, a first cover, and a second cover. The first and second covers are hingedly secured to the spine. The second cover is configured and adapted to engage the first cover, to secure closure of the container. Further, at least one of the first and second covers is provided with a band header for display of indicia, arranged along one edge of the cover on which the band header is provided.

The container can further include a first latching element defined on the first cover and a second latching element defined on the second cover, for engaging the first latching element.

If desired or required, a pocket can be applied thereto, extending from and across an outer face of the first cover, around the spine and across an outer face of the second cover. Additional features set forth above in connection with the first aspect of the invention can advantageously be applied to this aspect of the invention

It is to be understood that both the foregoing general description and the following detailed description are exemplary and are intended to provide a non-limiting explanation of the invention.

A first aspect of the invention provides a container for carrying a disc-shaped information storage medium, the container comprising: a) a bottom cover having inner and outer surfaces; b) a top cover having inner and outer surfaces; c) a medium-engaging element provided on the inner surface of at least one of the top and bottom covers or on an insert tray inserted into the bottom cover, for securing a storage medium thereto; d) a hinge connecting the bottom cover and the top cover; e) display band region provided on the outer surface of at least one of the top cover and the bottom cover, in an area proximate and along one edge of the container, the display band region being configured and adapted for display of indicia, and being exposed to an outer side of the container, characterised in that the display band region provides a transition that stands proud of the adjacent surface of the outer surface of the at least one of the top cover and the bottom cover.

Preferably, said inner surface or said tray lies in a first plane and comprises an area over which a disc shaped information storage medium is securable by the medium engaging element, said transition being spaced from said area in a direction parallel to said plane.

Preferably, the medium engaging element is either aligned substantially centrally of the container and/or comprises a rosette for engaging a central aperture in a disc shaped information storage medium; and comprised of a circular upstand for surrounding a periphery of a disc-shaped storage medium.

Preferably, opposed terminal edges of the transition are located at opposed side edges of the container.

Preferably, the edges of the container are rounded.

Preferably, the transition is suitable for retaining printed material disposed within a sleeve held on said adjacent surface;

Preferably, the container further comprises a film applied thereto forming a pocket extending from and across the outer surface of the top cover, around the hinge and across the outer surface of the bottom cover, the pocket providing a receptacle for printed material related to the media held in the container wherein the film is offset from the display band region, allowing an unobstructed view of the display band region, an edge of the film providing access to an interior of the pocket, which edge is located adjacent said transition.

Preferably, the display band region stands proud of said adjacent surface by 0.5 to 1.0 mm.

Preferably, said display band region carries indicia thereon, which indicia is one or more of printed on, molded in or embossed onto the display band.

Preferably, the display band is defined in a region extending between about 1 to 5 centimeters from an end wall of the container.

Preferably, the display band region extends fully across the container, parallel to the end wall.

Preferably, the indicia is provided on an extension supported by and extending from the bottom cover or the insert tray inserted into the bottom cover and is visible through an aperture defined in the display band region of the top cover when the container is in a closed position.

Preferably, said display band region extends from said at least one of the top and bottom covers onto, and is further formed on, the other of the top and bottom covers along said top edge thereof.

Preferably, the entire display band region stands proud of said adjacent surface.

Preferably, the container further comprises a disc-shaped information storage media.

### BRIEF DESCRIPTION OF THE DRAWINGS

The accompanying drawings, which are incorporated in and constitute part of this specification, are included to illustrate and provide a further understanding of the method and system of the invention. Together with the description, the drawings serve to explain the principles of the invention, wherein:
Figure 1A is a front isometric view of a first embodiment of a media container in accordance with the invention, having indicia provided in a region near an edge of the container, shown in a closed condition;
Figure 1B is a side isometric view of the container of Figure 1A, shown in an open condition;
Figure 2 is a front isometric view of a variation of the container of Figure 1A, shown in an open condition, having internal indicia regions differing from those of the container of Figure 1B;
Figure 3A is another embodiment of a media container constructed in accordance with the invention, having a band-shaped region for display of indicia, the container being shown in a closed condition;
Figure 3B is a side isometric view of the container of Figure 3A, shown in an open condition;
Figure 4 is an isometric view of still another embodiment of a media container constructed in accordance with the invention, having indicia provided in band-shaped display region thereon, the indicia being molded into the display region;
Figure 5 is an isometric view of the media container of Figure 4, shown in an open condition, illustrating the outer surface of the media container;
Figure 6A is a further embodiment of a media container constructed in accordance with the invention, having an insert tray provided therewith, which includes indicia formed thereon, which is displayed through an aperture formed in the cover;
Figure 6B is an isometric view of the container of Figure 6A, with the insert tray fully inserted therein; and
Figure 6C is an isometric view of the container of Figure 6A, shown in a closed condition.

### DETAILED DESCRIPTION OF THE PREFERRED EMBODIMENT

Reference will now be made in detail to selected embodiments of the invention, which are illustrated in the accompanying drawings.

In accordance with the invention, a container for carrying an information storage medium is provided including top and bottom walls connected by a hinge or spine with each wall having upper and lower faces, and side walls and end walls extending inwardly therefrom. The container further includes a medium-engaging element for securing the storage medium thereto, and a display region provided on the upper face of the top wall, in a region proximate at least one of the first and second end walls. The top and bottom walls, together with their respective side walls and end walls form first and second covers, respectively. The covers are hinged together, and are provided with latching features to secure the container in a closed condition.

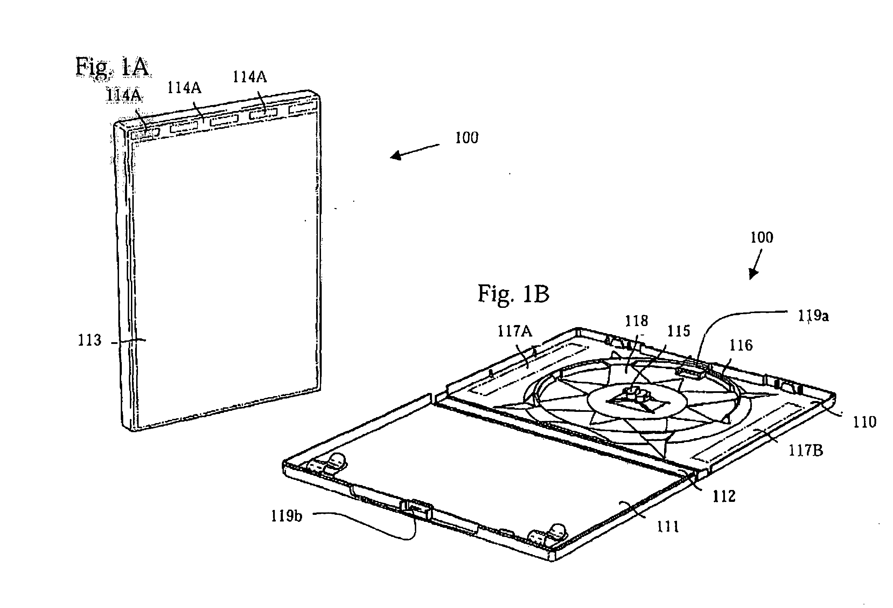

For purpose of explanation and illustration, and not limitation, Figures 1A and 1B Illustrate a media container 100 in accordance with the invention comprising a bottom wall or base portion (or bottom "wall" or "cover") 110 connected to a lid portion (or upper "wall" or "cover") 111 by a spine portion 112. A clear plastic film 113 is attached to the exterior of the container 100 forming a pocket. A cover sheet or "slip sheet" (shown blank) is inserted into the pocket behind the film 113. The film 113 preferably does not cover the entire front face of the container but, instead, leaves a band 114 at the top where the outer surface of the container 100 remains exposed. The band 114 extends across the front face of the container, around the spine and across the rear face of the container. This band 114 is available for inclusion of indicia, such as customized molding or printing, e.g. of graphics or logos. In the example shown, a series of words (represented by areas 114A) are molded or printed in the area of the band 114 on the front face of the container. These may, for example, be the name of the studio, movie or artist. Alternatively or additionally, a logo corresponding to a media format can be included in the band 114, such as a logo corresponding to one of "DVD," "HDDVD" or "Blu-Ray^{™}," formats, for example. Alternatively, or additionally, logos or symbols of a more 3-dimensional nature may be molded in the area of the band 114, e.g. projecting therefrom by up to a predetermined distance, e.g., 3 mm. Alternatively or additionally, the surfaces of the container in the area of the band 114 may be customized so as to have a distinctive shape or appearance, e.g. the edges, corners and/or faces thereof may be formed with various convex, concave or angular features. In accordance with one aspect of the invention, the band 114 stands proud, e.g. by 0.5-1.0mm, of the adjacent surfaces of the container 100.

A similar band (not shown) not covered by a film 113 can be provided around the lower end of the container 100, in place of the band 114 or in addition thereto. In alternate embodiments, the film 113 is omitted so that the major faces of the lid, spine and base portions can be provided with customized features at any position thereon.

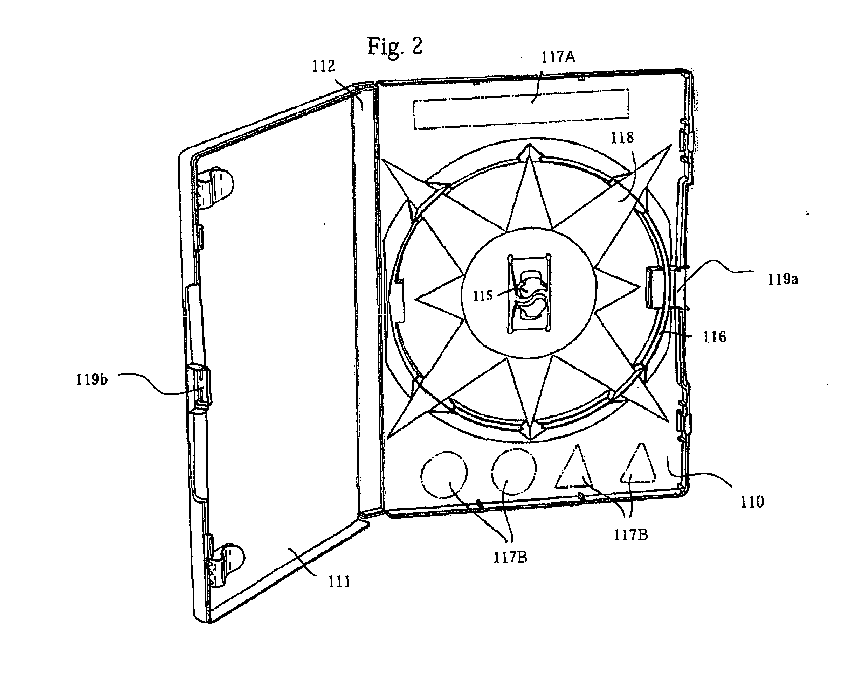

Figures 1B and 2 illustrate two variations of the interior portion of the container 100. A media-engaging element (or "rosette") 115 is provided on the interior of the base portion 110 for receiving a disc-shaped medium, and a circular upstand 116 is provided for surrounding the periphery of the disc-shaped medium. In the embodiments of Figures 1B and 2, the upstand 116 is positioned substantially centrally in the base portion 110 so regions 117A and 117B are left at either end of the base portion. In an alternative embodiment (not shown), the upstand 116 may be offset from the center of the base portion 110, such that it is positioned, for example, closer to the bottom end walls. Internal printed or molded graphics features may be formed in the display regions 117A and 117B (outlined by dash-dot lines). If desired, the display region 114 can be embodied as a transparent region, with the indicia provided in region 117A being visible therethrough.

Graphics, or other customized features can, however, be formed anywhere on the internal faces of the base, spine and lid portions. The illustrated embodiments show a star shape 118 molded on the base portion 10 within the area defined by the circular upstand 116 and extending beyond the upstand. V-shaped grooves are additionally formed within the upstand 116, and correspond to portions of the star shape 118. Naturally, the specific shape of features of containers in accordance with the invention can be embodied as desired. For example, while the display region 117B of Figure 1B is substantially rectangular, the display region 117B of Figure 2 includes circular and triangular regions.

Moreover, as set forth above, the container 100, preferably includes one or more latching features to secure the container 100 in a closed condition. Latching elements 119a and 119b are arranged on respective ones of the bottom wall 110 and the top wall 111.

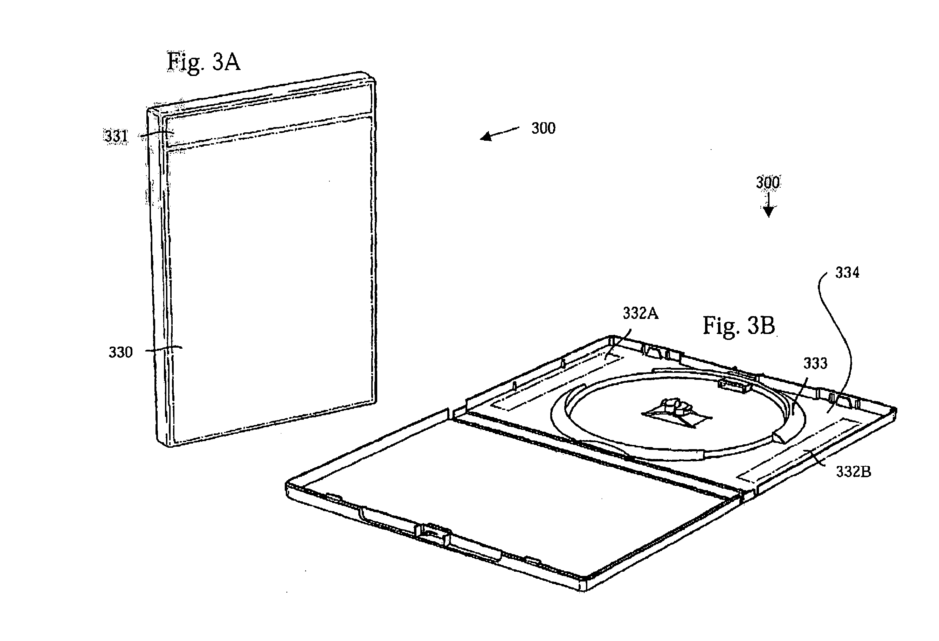

Figures 3A and 3B illustrate another embodiment of a media container 300 in accordance with the invention having regions 330, 331, 332A and 332B for display of indicia, which can be customized as desired. As with the aforementioned embodiment described above in connection with Figures 1A, 1B and 2, the exterior of the container 300 includes an indicia display region 330 in which a conventional display material is provided by, e.g., a printed sheet positioned behind a clear film attached to the exterior of the container. A second display region 331 in the form of a band is arranged adjacent one or more ends of the container 300, which extends generally the width of the container 300. As with the band region 114 of the container 100 of Figures 1A, 1B and 2, the outer surface of the injection molded container 300 in this region 331 is preferably exposed-that is, not covered by a clear film. Although in alternate embodiments, a clear film can be applied thereto, if desired. In this band region 331, as with the foregoing embodiment, customized printed or molded features can be provided.

In the interior of the container 300, customized features can additionally be formed in flat areas, e.g. as indicated at 332A and 332B, on the exposed surfaces of the interior of the base portion 334 outside an upstand 333. A logo may, for example, be printed on or molded in area 332A and the name of a film or series to which the medium to be housed in the container relates may be printed on or molded in area 332B. In addition, the shape of the upstand 333 may be customized, e.g. to tie in with a feature of the logo or movie, if desired.

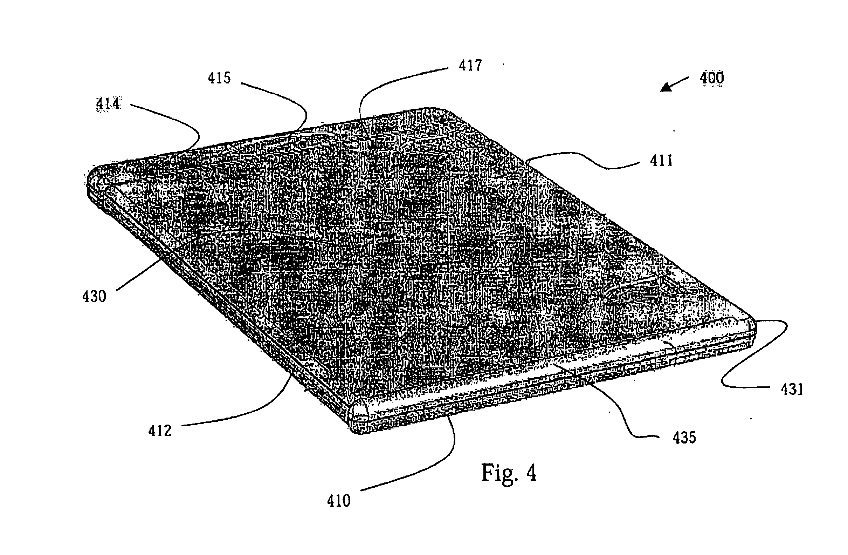

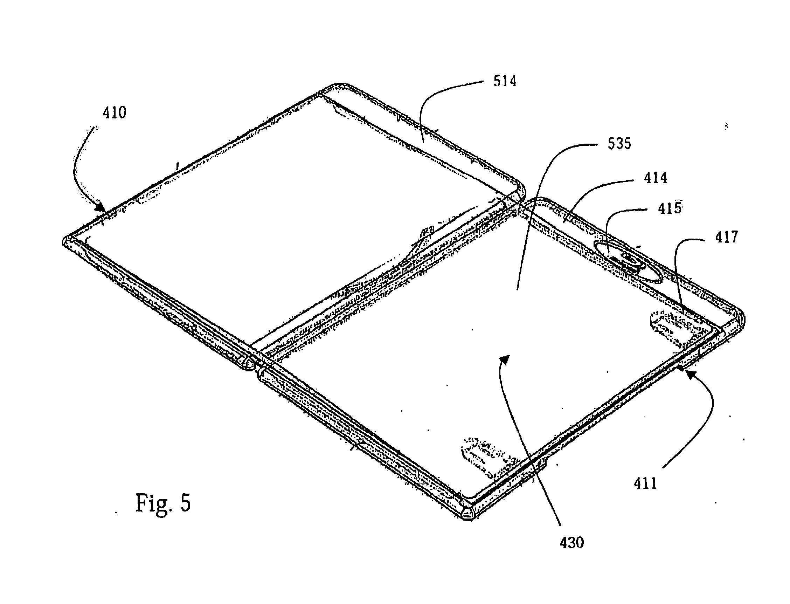

Figures 4 and 5 illustrate a further embodiment of a container 400 constructed in accordance with the invention. The container 400 includes a top cover 411 and a bottom cover 410, joined by a hinge element 412. The hinge 412, as with other embodiments set forth herein, can be a so-called living hinge formed by providing a region of thinned material thickness, but any suitable hinge design can be used.

The top cover 411 includes a plurality of display regions 430, 414. The larger display region 430, which can extend around the hinge 412 to the bottom cover 410, will typically include a clear sleeve 535 (Fig. 5) adhered thereto with printed material being inserted behind the sleeve, as described above in connection with the preceding embodiments. A band-shaped display region 414 is provided along the upper edge of the container 400, with indicia 415 integrally molded therewith. As illustrated, the band-shaped display region 414 stands proud of the large display region 430, with a small transition 417 defining a border between the regions. This transition 417 can help secure printed material within a sleeve 535 held on the large display region 430.

As can be seen in Figure 5, the bottom cover 410 includes a band-shaped display region 514 , which mirrors the band-shaped display region 414 of the top cover 411, although in the illustrated embodiment, no indicia is included thereon.

Further, the embodiment of Figures 4 and 5 includes rounded edges 435, which meet at respective rounded corners 431. As illustrated, the corners are arcuate and relatively gradual. However, variations on the precise shape of the corners is possible.

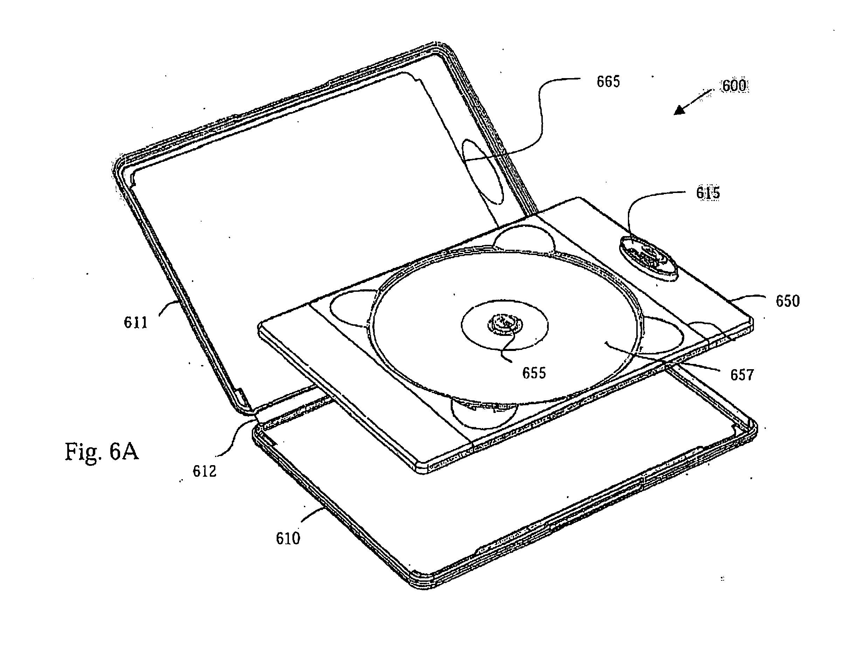

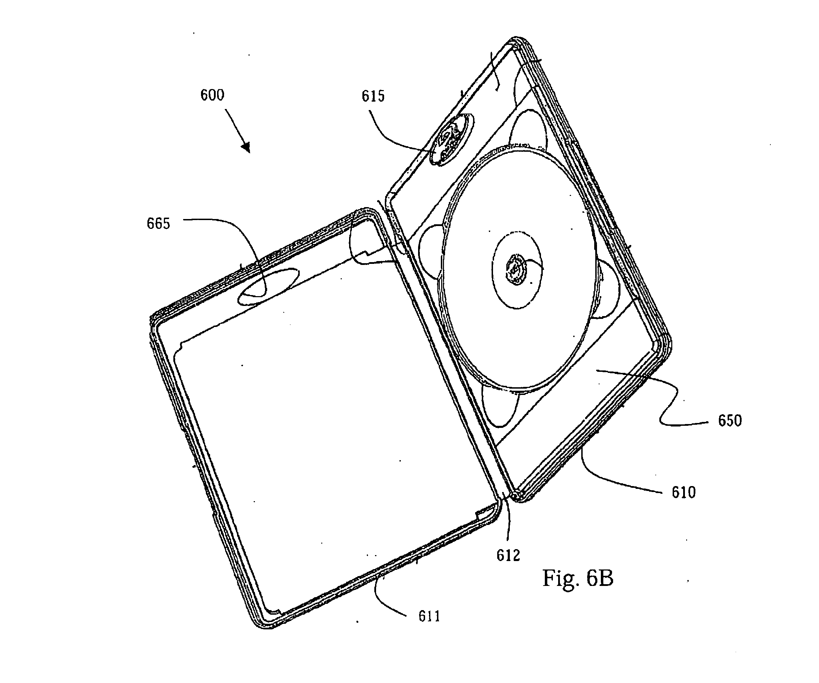

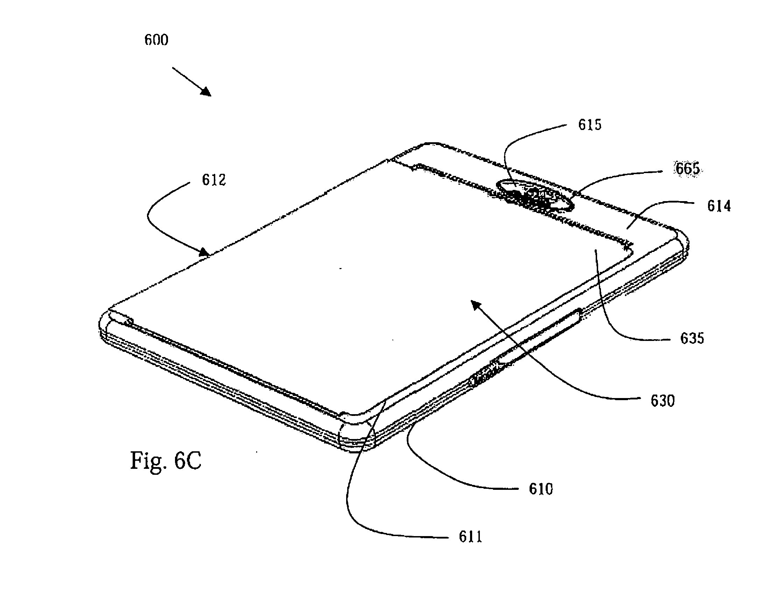

Figures 6A, 6B and 6C Illustrate yet another embodiment of a media container 600 constructed in accordance with the present invention. The container 600 includes a top cover 611 and a bottom cover 610, joined by a hinge element 612. The container 600 further includes an insert tray 650, which is inserted into the bottom cover 610, and includes a rosette 655 and a circular detent 657 provided for receiving the periphery of the disc-shaped medium. The tray 650 further includes an indicia region 615 formed on and extending from the surface of the tray 650, so that when the top cover 611 is closed, the indicia region 615 is visible through an aperture 665 formed in the top cover 611 when the container is in a closed position. With this configuration, the indicia can be changed without the need to redesign and mold an entire container, but only a tray (e.g., tray 650) need be redesigned. Alternatively still, the indicia region 615 can be removable from the container 600 or the insert tray 650, thereby only necessitating a small piece be changed if a redesign occurs.

Figure 6B illustrates the container 600, with the insert tray 650 secured therein. The tray can be attached to the remainder of the container 600 by any suitable means, such as, but not limited to adhesive, cohesive, heat, sonic or solvent welding, mechanical interlocking elements or snap fit.

As can be seen in Figure 6C, the top cover 611 includes a plurality of display regions 630, 614. As with foregoing embodiments, the larger display region 630, which can extend around the hinge 612 to the bottom cover 610, will typically include a clear sleeve 635 secured thereto, with printed material being inserted behind the sleeve 635. A band-shaped display region 614 is provided along the upper edge of the top cover 611, and as mentioned above, includes an aperture 665 through which the indicia region 615 passes, and is visible from the external container. Alternatively, the display region 614 can be transparent, and the indicia region is visible therethrough. Moreover, the indicia region 615 need not extend fully to or through the aperture 665. Indeed, the indicia region 615 can be coplanar with the insert tray 650. As will be appreciated, the indicia region 615 need not be provided on a separate insert tray, but can be provided on the bottom cover 610 itself, if desired.

It will be apparent to those skilled in the art that various modifications and variations can be made in the media containers of the present invention without departing from the scope of the invention as defined in the appended claims.

A container for carrying an information storage medium includes top-and bottom walls connected by a hinge or spine with each wall having upper and lower faces and side walls and end walls extending inwardly therefrom. The container further includes a medium-engaging element for securing the storage medium thereto, and a display region provided on the upper face of the top wall, in a region proximate at least one of the first and second end walls. The top and bottom walls, together with their respective side walls and end walls form first and second covers, respectively. The covers are hinged together, and are provided with latching features to secure the container in a closed condition.

## Claims

1. A container for carrying a disc-shaped information storage medium, the container comprising:
a) a bottom cover (110; 410; 610) having inner and outer surfaces;
b) a top cover (111; 411; 611) having inner and outer surfaces;
c) a medium-engaging element (115; 655) provided on the inner surface of at least one (110) of the top and bottom covers or on an insert tray (650) inserted into the bottom cover (610), for securing a storage medium thereto;
d) a hinge (112; 412; 612) connecting the bottom cover (110; 410; 610) and the top cover (111; 411; 611);
e) a display band region (114; 414; 614) provided on the outer surface of at least one of the top cover (111; 411; 611) and the bottom cover (110; 410; 610), and extending across at least a portion thereof, in an area proximate and along one edge of the container, the display band region (114; 331; 414; 614) being configured and adapted for display of indicia, and being exposed to an outer side of the container, **characterised in that** the display band region (114; 414; 614) provides a transition that stands proud of an adjacent region of the outer surface of the at least one of the top cover (111; 411; 611) and the bottom cover (110; 410; 610).

2. The container of claim 1, wherein said inner surface or said insert tray lies in a first plane and comprises an area over which a disc shaped information storage medium is securable by the medium engaging element, said transition being spaced from said area in a direction parallel to said first plane.

3. The container of claim 1 or claim 2, wherein the medium engaging element is either aligned substantially centrally of the container and/or comprises a rosette for engaging a central aperture in a disc shaped information storage medium; and comprised of a circular upstand for surrounding a periphery of a disc-shaped storage medium.

4. The container of claims 1 to 3, wherein opposed terminal edges of the transition are located at opposed side edges of the container.

5. The container of claims 1 to 4 wherein the container comprises edges which edges are rounded.

6. The container of claims 1 to 5, wherein the transition (417) is suitable for retaining printed material disposed within a sleeve held on said adjacent surface (430).

7. The container of claims 1 to 6, further comprising a film (113; 330; 535; 635) applied thereto forming a pocket extending from and across the outer surface of the top cover (111; 411; 611, around the hinge (112; 412; 612) and across the outer surface of the bottom cover (110; 410; 610), the pocket providing a receptacle for printed material related to the media held in the container wherein the film (113; 330; 535; 635) is offset from the display band region (114; 331; 414; 614), allowing an unobstructed view of the display band region (114; 331; 414; 614), an edge of the film (113; 330; 535; 635) providing access to an interior of the pocket, which edge is located adjacent said transition.

8. The container according to any of claims 1 to 7, wherein the display band region stands proud of said adjacent region by 0.5 to 1.0 mm.

9. The container of any of claims 1 to 8, wherein said display band region (114; 414) carries indicia thereon, which indicia is one or more of printed on, molded in or embossed onto the display band.

10. The container of any of claims 1 to 9, wherein the display band (114; 331; 414; 614) is defined in a region extending between about 1 to 5 centimeters from an end wall of the container.

11. The container of any of claims 1 to 10, wherein the display band region (114; 331; 414; 614) extends fully across the container, parallel to the end wall.

12. The container of any of claims 1 to 11, wherein indicia is provided on an extension supported by and extending from the bottom cover (610) or the insert tray (650) inserted into the bottom cover (610) and is visible through an aperture (665) defined in the display band region (614) of the top cover (611) when the container is in a closed position.

13. The container of any of claims 1 to 12 wherein said display band region (114; 414) extends from said at least one of the top and bottom covers (110; 410; 610; 111; 411; 611) onto, and is further formed on, the other of the top and bottom covers (110; 410; 610; 111; 411; 611) along said top edge thereof.

14. The container of any preceding claim wherein the entire display band region (114; 414; 614) stands proud of said adjacent surface (430).

15. The container according to any preceding claim further comprising a disc-shaped information storage media.

## Patentansprüche

1. Behälter zum Tragen eines scheibenförmigen Informationsspeichermediums, wobei der Behälter umfasst:
a) eine Bodenabdeckung (110; 410; 610, die innere und äußere Flächen aufweist;
b) eine obere Abdeckung (111, 411; 611), die innere und äußere Flächen aufweist;
c) ein Medium-Eingriffselement (115; 655), das an der inneren Fläche von wenigstens einer (110) der oberen Abdeckung oder der Bodenabdeckung oder an einem Einsatz (650), der in die Bodenabdeckung (610) eingesetzt wird, bereitgestellt ist, um ein Speichermedium dadurch zu sichern;
d) ein Gelenk (112; 412; 612), das die Bodenabdeckung (110; 410; 610) und die obere Abdeckung (111, 411; 611) verbindet;
e) einen Anzeigebandbereich (114; 331; 414; 614), der an einer Außenfläche von entweder der oberen Abdeckung (111, 411; 611) oder der Bodenabdeckung (110; 410; 610) bereitgestellt wird und der sich über wenigstens einen Abschnitt davon erstreckt, und zwar in einem Bereich nahe und entlang einer Kante des Behälters, wobei der Anzeigebandbereich (114; 331; 414; 614) konfiguriert und angepasst ist, Zeichen anzuzeigen, und an der Außenseite des Behälters exponiert ist, **dadurch gekennzeichnet, dass** der Anzeigebandbereich (114; 331; 414; 614) einen Übergang bereitstellt, der von einer benachbarten Region der Außenfläche von entweder der oberen Abdeckung (111, 411; 611) oder der Bodenabdeckung (110; 410; 610) hervorsteht.

2. Behälter gemäß Anspruch 1, wobei die innere Fläche oder der Einsatz in einer ersten Ebene liegen und einen Bereich umfassen, über den ein scheibenförmiges Informationsspeichermedium durch das Medium-Eingriffselement gesichert werden kann, wobei der Übergang von dem Bereich in einer Richtung beabstandet ist, die parallel zu der ersten Ebene ist.

3. Behälter gemäß Anspruch 1 der 2, wobei das Medium-Eingriffselement entweder im Wesentlichen mittig zu dem Behälter ausgerichtet ist und/oder eine Rosette zur Ineingriffnahme einer zentralen Öffnung in einem scheibenförmigen Informationsspeichermedium umfasst; und wobei das Medium-Eingriffselement eine runde Aufkantung zum Einfassen eines Randbereichs des scheibenförmigen Informatxonsspeichermediums umfasst.

4. Behälter gemäß Anspruch 1 bis 3, wobei entgegengesetzte Endkante des Übergangs an entgegengesetzten Seitenkanten des Behälters angeordnet sind.

5. Behälter gemäß Anspruch 1 bis 4, wobei der Behälter Kanten umfasst, die abgerundet sind.

6. Behälter gemäß Anspruch 1 bis 5, wobei der Übergang (417) geeignet ist, bedrucktes Material zu halten, das in einer Hülse angeordnet ist, die an der angrenzenden Fläche (430) gehalten wird.

7. Behälter gemäß Anspruch 1 bis 6, der weiterhin eine Folie (113; 330; 535; 635) umfasst, die an diesem angebracht ist, um eine Tasche auszubilden, die sich von und über die äußere Fläche der oberen Abdeckung (111, 411; 611), um das Gelenk (112; 412; 612) und über die äußere Fläche der Bodenabdeckung (110; 410; 610) erstreckt, wobei die Tasche ein Behältnis für bedrucktes Material bereitstellt, das zu dem Medium gehört, das in dem Behälter gehalten wird, wobei die Folie (113; 330; 535; 635) zu dem Anzeigebandbereich (114; 331; 414; 614) versetzt ist, um einen ungehinderten Blick auf den Anzeigebandbereich (114; 331; 414; 614) zu ermöglichen, und wobei eine Kante der Folie (113; 330; 535; 635) Zugang zu einem Innenbereich der Tasche bereitstellt, deren Kante nahe dem Übergang angeordnet ist.

8. Behälter gemäß einem der Ansprüche 1 bis 7, wobei der Anzeigebandbereich über den benachbarten Bereich 0,5 bis 1,0mm hervorsteht.

9. Behälter gemäß einem der Ansprüche 1 bis 8, wobei auf dem Anzeigebandbereich (114; 414) Zeichen sind, wobei die Zeichen eines oder mehrere Zeichen sind, die auf das Anzeigeband aufgedruckt, gegossen oder geprägt sind.

10. Behälter gemäß einem der Ansprüche 1 bis 9, wobei das Anzeigeband (114; 331; 414; 614) in einem Bereich definiert ist, der sich zwischen etwa 1 bis 5 Zentimeter von einer Endwandfläche des Behälters erstreckt.

11. Behälter gemäß einem der Ansprüche 1 bis 10, wobei sich der Anzeigebandbereich (114; 331; 414; 614) vollständig üben den Behälter und parallel zu der Endwandfläche erstreckt.

12. Behälter gemäß einem der Ansprüche 1 bis 11, wobei Zeichen an einer Erweiterung bereitgestellt sind, die durch die Bodenabdeckung (610) oder durch den in die Bodenabdeckung (610) eingesetzten Einsatz (650) gehalten wird, bzw. sich davon erstreckt und durch eine Öffnung (665) sichtbar ist, die in dem Anzeigebandbereich (614) der oberen Abdeckung (611) definiert ist, wenn der Behälter in einer geschlassenen Position ist.

13. Behälter gemäß einem der Ansprüche 1 bis 12, wobei sich der Anzeigebandbereich (114; 414) entweder von der oberen Abdeckung oder der Bodenabdeckung (110; 410; 610; 111; 411; 611) erstreckt und weiterhin entweder auf der entsprechenden oberen Abdeckung oder der entsprechenden Bodenabdeckung (1110; 410; 610; 111; 411; 611) entlang der jeweils oberen Kante ausgebildet ist.

14. Behälter gemäß einem der vorherigen Ansprüche, wobei der gesamte Anzeigenbandbereich (114; 414; 614) von der angrenzenden Fläche (430) hervorsteht.

15. Behälter gemäß einem der vorherigen Ansprüche, der weiterhin ein scheibenförmiges Informationsspeichermedium umfasst.

## Revendications

1. Boîtier pour le transport d'un support de stockage d'informations en forme de disque, le boîtier comprenant :
a) un couvercle inférieur (110 ; 410 ; 610) ayant des surfaces intérieure et extérieure ;
b) un couvercle supérieur (111 ; 411 ; 611) ayant des surfaces intérieure et extérieure ;
c) un élément d'accrochage de support d'informations (115 ; 655) prévu sur la surface intérieure d'au moins l'un (110) des couvercles supérieur et inférieur ou sur un plateau d'insertion (650) inséré dans le couvercle inférieur (610), pour fixer un support de stockage sur celui-ci ;
d) une articulation (112 ; 412 ; 612) reliant le couvercle inférieur (110 ; 410 ; 610) au couvercle supérieur (111 ; 411 ; 611) ;
e) une région de bande d'affichage (114 ; 414 ; 614) prévue sur la surface extérieure d'au moins un élément parmi le couvercle supérieur (111 ; 411 ; 611) et le couvercle inférieur (110 ; 410 ; 610), et s'étendant sur au moins une partie de celui-ci, dans une région proche et le long d'un bord du boîtier, la région de bande d'affichage (114 ; 331 ; 414 ; 614) étant configurée et adaptée pour afficher des indices, et étant exposée à un côté extérieur du boîtier, **caractérisé en ce que** la région de bande d'affichage (114 ; 414 ; 614) fournit une transition qui est proéminente par rapport à une région adjacente de la surface extérieure dudit au moins un élément parmi le couvercle supérieur (111 ; 411 ; 611) et le couvercle inférieur (110 ; 410 ; 610).

2. Boîtier selon la revendication 1, dans lequel ladite surface intérieure ou ledit plateau d'insertion se trouve dans un premier plan et comprend une région sur laquelle un support de stockage d'informations en forme de disque peut être fixé par l'élément d'accrochage de support d'informations, ladite transition étant espacée de ladite région dans une direction parallèle audit premier plan.

3. Boîtier selon la revendication 1 ou 2, dans lequel l'élément d'accrochage de support d'informations est soit aligné de façon substantiellement centrale par rapport au boîtier et/ou comprend une rosace pour accrocher une ouverture centrale d'un support de stockage d'informations en forme de disque ; et
est constitué d'un montant circulaire destiné à entourer une périphérie d'un support de stockage en forme de disque.

4. Boîtier selon les revendications 1 à 3, dans lequel les bords terminaux opposés de la transition sont situés au niveau de bords latéraux opposés du boîtier.

5. Boîtier selon les revendications 1 à 4, dans lequel le boîtier comprend des bords, lesquels bords sont arrondis.

6. Boîtier selon les revendications 1 à 5, dans lequel la transition (417) est adaptée pour retenir un matériau imprimé placé dans une pochette maintenue sur ladite surface adjacente (430).

7. Boîtier selon les revendications 1 à 6, comprenant en outre un film (113 ; 330 ; 535 ; 635) appliqué sur celui-ci, formant une poche s'étendant depuis et d'un bord à l'autre de la surface extérieure du couvercle supérieur (111 ; 411 ; 611) autour de l'articulation (112 ; 412 ; 612) et d'un bord à l'autre de la surface extérieure du couvercle inférieur (110 ; 410 ; 610), la poche constituant un réceptacle pour un matériau imprimé se rapportant au support d'informations contenu dans le boîtier, dans lequel le film (113 ; 330 ; 535 ; 635) est décalé par rapport à la région de bande d'affichage (114 ; 331 ; 414 ; 614), ce qui permet une vue non obstruée de la région de bande d'affichage (114 ; 331 ; 414 ; 614), un bord du film (113 ; 330 ; 535 ; 635) permettant l'accès à une partie intérieure de la poche, lequel bord est adjacent à ladite transition.

8. Boîtier selon l'une quelconque des revendications 1 à 7, dans lequel la région de bande d'affichage est proéminente de 0,5 à 1,0 mm par rapport à ladite région adjacente.

9. Boîtier selon l'une quelconque des revendications 1 à 8, dans lequel la région de bande d'affichage (114 ; 414) porte des indications, lesquelles indications présentent une ou plusieurs des caractéristiques suivantes : elles sont imprimées sur, moulées dans ou formées en relief sur la bande d'affichage.

10. Boîtier selon l'une quelconque des revendications 1 à 9, dans lequel la bande d'affichage (114 ; 331 ; 414 ; 614) est définie dans une région s'étendant entre environ 1 à 5 centimètres d'une paroi d'extrémité du boîtier.

11. Boîtier selon l'une quelconque des revendications 1 à 10, dans lequel la région de bande d'affichage (114 ; 331 ; 414 ; 614) s'étend entièrement d'un bord à l'autre du boîtier, parallèlement à une paroi d'extrémité.

12. Boîtier selon l'une quelconque des revendications 1 à 11, dans lequel des indications sont prévues sur une extension supportée par et s'étendant depuis le couvercle inférieur (610) ou le plateau d'insertion (650) inséré dans le couvercle inférieur (610) et sont visibles à travers une ouverture (665) définie dans la région de bande d'affichage (614) du couvercle supérieur (611) quand le boîtier est dans une position fermée.

13. Boîtier selon l'une quelconque des revendications 1 à 12, dans lequel ladite région de bande d'affichage (114 ; 414) s'étend depuis ledit au moins un des couvercles supérieur et inférieur (110 ; 410 ; 610 ; 111 ; 411 ; 611) en allant sur, et est en outre formé sur, l'autre des couvercles supérieur et inférieur (110 ; 410 ; 610 ; 111 ; 411 ; 611) le long dudit bord supérieur de celui-ci.

14. Boîtier selon l'une quelconque des revendications précédentes, dans lequel la région de bande d'affichage entière (114 ; 414 ; 614) est proéminente par rapport à ladite surface adjacente (430).

15. Boîtier selon l'une quelconque des revendications précédentes, comprenant en outre un support de stockage d'informations en forme de disque.
